# EUROPÄISCHE PATENTSCHRIFT

(11) **EP 2 855 956 B1**
(45) Veröffentlichungstag und Bekanntmachung des Hinweises auf die Patenterteilung: **27.12.2017**
(21) Anmeldenummer: 13725080.9
(22) Anmeldetag: 24.05.2013
(51) Int. Cl.: F16D 1/10, F16D 3/02

(54) **DREHMOMENTÜBERTRAGUNGSVORRICHTUNG**
TORQUE TRANSMISSION DEVICE
DISPOSITIF DE TRANSMISSION DE COUPLE

(30) Priorität: 01.06.2012 DE 102012010792
(43) Veröffentlichungstag der Anmeldung: 08.04.2015
(73) Patentinhaber: Audi AG, 85045 Ingolstadt (DE)
(72) Erfinder: PAHLICH, Lutz, 85051 Ingolstadt (DE)
(74) Vertreter: Wohnert, Dietmar
(86) Internationale Anmeldenummer: PCT/EP2013/001532
(87) Internationale Veröffentlichungsnummer: WO 2013/178340

(56) Entgegenhaltungen:
- DE-A1- 19 855 025
- DE-B- 1 205 345
- GB-A- 2 061 458
- GB-A- 2 264 548
- US-A- 4 106 311

## Beschreibung

Die Erfindung betrifft eine Drehmomentübertragungsvorrichtung, insbesondere für ein Kraftfahrzeug.

Bei Kraftfahrzeugen ist es erforderlich, das vom Antriebsmotor erzeugt Drehmoment an die Antriebsräder zu übertragen. Diese drehmomentübertragende Wirkkette wird häufig auch als Antriebsstrang bezeichnet. An den Antriebsmotor sind abtriebsseitig meist weitere Komponenten wie Kupplung, Getriebe, Differentiale und Radaufnahmen gekoppelt. Die Übertragung von Drehmoment zwischen rotierenden Körpern erfolgt häufig unter Verwendung sogenannter Welle-Nabe-Verbindungen, wobei stoffschlüssige, formschlüssige oder reibschlüssige Kraftübertragungsmechanismen zum Einsatz kommen. Eine formschlüssige Kraftübertragung kann beispielsweise mittels einer gegenseitigen Verzahnung der Welle und der Nabe erreicht werden. Dabei weisen die Welle am Außenumfang und die Nabe am Innenumfang entsprechende, ineinander greifende Verzahnungen auf.

Nachteilig an diesen Verzahnungen ist jedoch, dass sie aufgrund des für die Montage nötigen radialen Spiels in manchen Betriebszuständen zu Geräuschentwicklung neigen, was den Fahrkomfort beeinträchtig. Ferner kann zu einem erhöhten Verschleiß kommen.

Aus der DE 12 05 345 B ist eine Drehmomentübertragungsvorrichtung gemäß dem Oberbegriff des Anspruchs 1 bekannt.

Aus DE102006017167A1 sind Bremselemente für Welle-Nabe-Verbindungen bekannt, welche von außen in die Verzahnung teilweise eingreifen. Nachteilig ist hier die aufwändige Befestigung der Bremselemente an Welle oder Nabe.

Aus DE19855025A1 ist eine Federung für eine Zahnkupplung bekannt, welche eine radiale Kraft auf Welle und Nabe ausübt, um diese aus ihre konzentrische Lage zu verschieben und an zwei gegenüberliegenden Stellen in Anlage zu bringen.

Es ist die Aufgabe der vorliegenden Erfindung, eine Drehmomentübertragungsvorrichtung bereitzustellen, welche sich durch einen verminderte Geräuschentwicklung, eine einfache Montage und eine kostengünstige Konstruktion auszeichnet.

Diese Aufgabe wird durch die Drehmomentübertragungsvorrichtung gemäß dem unabhängigen Anspruch gelöst. Vorteilhafte Ausgestaltungen der Drehmomentübertragungsvorrichtung sind in den abhängigen Ansprüchen beschrieben.

Anspruch 1 betrifft eine Drehmomentübertragungsvorrichtung mit einer Welle, welche an ihrem Außenumfang eine Wellenverzahnung aufweist, und einer Nabe, welche an einem Innenumfang eine Nabenverzahnung aufweist. Die Nabe ist derart auf der Welle angeordnet, dass die Wellenverzahnung und die Nabenverzahnung ineinandergreifen, um Drehmoment zu übertragen. Die Drehmomentübertragungsvorrichtung weist ferner zumindest ein Federelement auf, welches die Nabe vollständig durchdringt und sich an der Welle und der Nabe abstützt und eine Federkraft auf die Nabe und die Welle ausübt, wobei zumindest eine Komponente der Federkraft derart gerichtet ist, dass über den gesamten Umfang von Welle und Nabe benachbarte Flanken der Wellenverzahnung und der Nabenverzahnung aneinandergedrückt werden.

Das Federelement weist zwei Schenkel auf, welche - in Umfangsrichtung der Welle - an unterschiedlichen Positionen, vorzugsweise gegenüberliegenden Positionen, zwischen der Welle und der Nabe angeordnet sind.

Die der Erfindung zugrunde liegenden Idee ist darin zu sehen, zwischen der Welle und der Nabe zumindest ein Federelement vorzusehen, welches sich an Welle und Nabe abstützt und eine Federkraft auf Welle und Nabe ausübt, welche eine relative Drehbewegung von Welle und Nabe entgegenwirkt und dadurch weitgehend unterdrückt. Durch die über den gesamten Umfang von Welle und Nabe in Umfangsrichtung gerichtete Komponente der Federkraft wird die relative Lage der Welle und Nabe in Drehrichtung stabilisiert. Die Federkraft bewirkt, dass benachbarte Zahnflanken der Wellenverzahnung und der Nabenverzahnung über den gesamten Umfang von Welle und Nabe aufeinander zum liegen kommen. Das Federelement hat dazu Auflagerpunkte an den Zahnflanken der Wellenverzahnung und/oder der Nabenverzahnung haben. Bei dieser Drehmomentübertragungsvorrichtung werden radiale Relativbewegungen, verursacht durch das Spiel zwischen Welle und Nabe, und somit unerwünschte Geräuschentwicklung und Verschleiß wirksam unterbunden. Das Federelement dient primär nicht zur Übertragung von Drehmoment und ist vorteilhafterweise so ausgebildet, dass es die Welle und die Nabe nur in Drehrichtung, nicht jedoch in axialer Richtung fixiert. Dadurch ist eine eventuell erforderliche axiale Ausgleichsbewegung zwischen Welle und Nabe (beispielsweise bedingt durch Fertigungstoleranzen oder Temperaturunterschiede zwischen Welle und Nabe) weiterhin möglich.

Das Federelement kann im Wesentlichen U-förmig gebogen sein. Die Schenkel erstrecken sich bevorzugt in dieselbe Richtung. Dabei kann es sich um ein einfach und kostengünstig herzustellendes Biegeteil aus Federdraht handeln.

Gemäß einer Ausgestaltung der Drehmomentübertragungsvorrichtung nach Anspruch 2 weist die Nabenverzahnung und/oder die Wellenverzahnung zumindest eine Lücke auf, wobei und das Federelement in der zumindest einen Lücke angeordnet ist.

Die zumindest eine Lücke der entsprechenden Verzahnung kann in axialer Richtung (also in Richtung der Drehachse der Welle) durchgängig ausgebildet. Im einfachsten Fall ist das Weglassen eines Zahns ausreichend zur Anordnung des Federelements. Bei mehreren Federelementen können an beliebigen Stellen der Verzahnung entsprechende Lücken ausgebildet sein. Gerade bei größer dimensionierten Federelementen wird so ausreichend Raum geschaffen und die Montage erleichtert.

Gemäß einer Ausgestaltung des Drehmomentübertragungsvorrichtung nach Anspruch 3 überdeckt bzw. hintergreift das Federelement an seiner, den freien Enden der Schenkel abgewandten Seite die Nabe an einer Stirnseite zumindest teilweise.

Dabei kann gemäß einer Ausgestaltung der Drehmomentübertragungsvorrichtung nach Anspruch 4 ein freies Ende zumindest eines Schenkels die Nabe an der gegenüberliegenden Stirnseite hintergreifen.

In einer Ausgestaltung der Drehmomentübertragungsvorrichtung nach Anspruch 5 umgreift das Federelement die Welle axial, wobei ein freies Ende zumindest eines Schenkels an der Welle befestigt ist.

Dabei handelt es sich um eine weitere, alternative Befestigungsmöglichkeit des Federelements.

Dabei kann, gemäß einer Ausgestaltung der Drehmomentübertragungsvorrichtung nach Anspruch 6, das Federelement derart ausgebildet sein, dass den beiden Schenkeln eine radial nach außen wirkende Federspannung aufgeprägt ist.

Durch diese Ausgestaltungen kann das Federelement leicht montiert und in axialer Richtung gesichert werden. Insbesondere ergibt sich durch die radial wirkende Federspannung in Verbindung mit den die Stirnseite der Nabe hintergreifenden freien Enden der Schenkel eine Art Clipsmechanismus.

Bei einer Drehmomentübertragungsvorrichtung nach Anspruch 7 ist das zumindest eine Federelement einstückig ausgebildet.

Insbesondere kann es sich um einfach und günstig herzustellende Teile aus Federstahl mit flachem oder rundem Querschnitt handeln.

Im Folgenden wird die Erfindung anhand von Ausführungsbeispielen mit Bezug auf die beigefügten Figuren näher erläutert. In den Figuren sind:
- Figur 2A: Eine schematische Darstellung einer Ausführungsform einer Drehmomentübertragungsvorrichtung;
- Figur 2B: Eine schematische Darstellung einer Ausführungsform des Federelements der Drehmomentübertragungsvorrichtung;
- Figur 2C: Eine schematische Querschnittsansicht der Drehmomentübertragungsvorrichtung.
- Figur 4A: Eine schematische Darstellung einer weiteren Ausführungsform einer Drehmomentübertragungs-vorrichtung;
- Figur 4B: Eine schematische Darstellung einer weiteren Ausführungsform des Federelements der Drehmomentübertragungsvorrichtung;

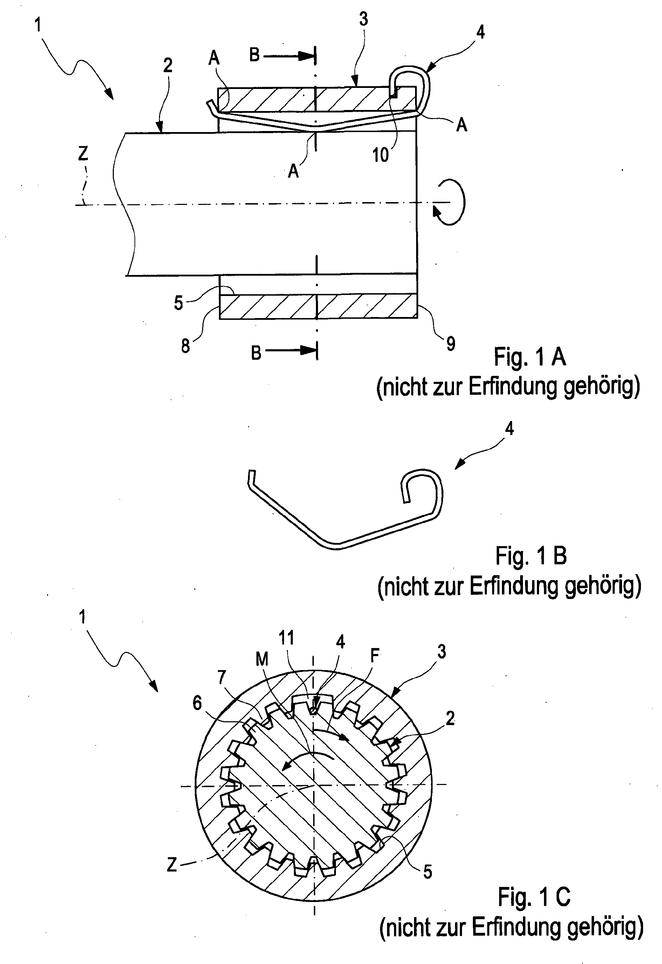

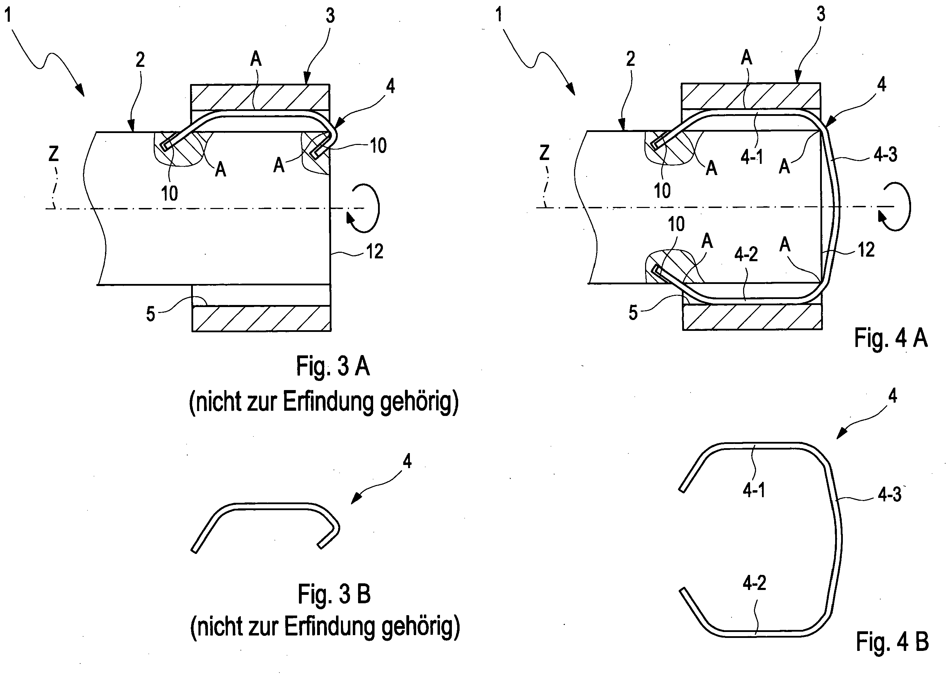

Die in den Figuren 1A, 1B, 1C und 3A, 3B dargestellten Ausführungsformen gehören nicht zur Erfindung.

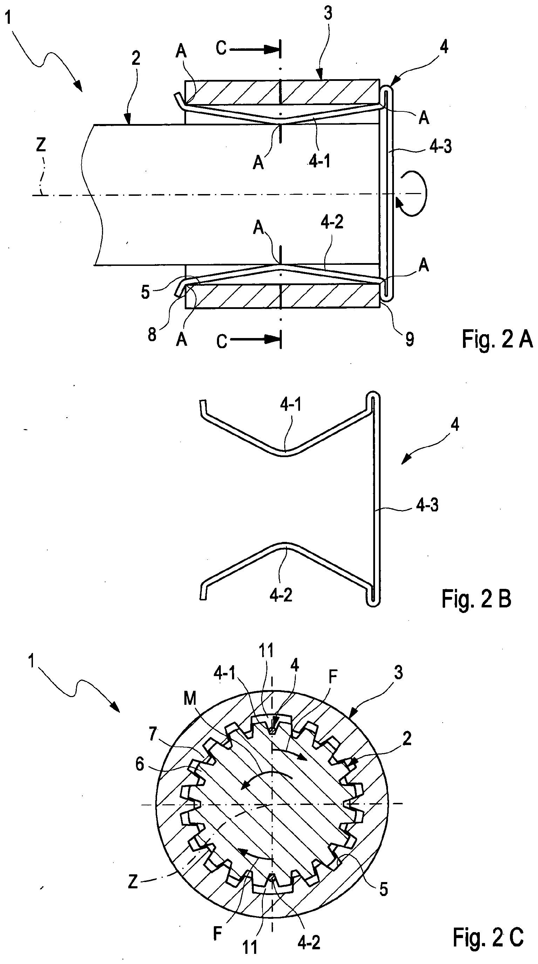

In den Figuren 1A und 2A sind zwei Ausführungsbeispiele einer Drehmomentübertragungsvorrichtung 1 schematisch dargestellt. Die Drehmomentübertragungsvorrichtungen 1 weisen jeweils eine Welle 2 mit der Drehachse Z, eine Nabe 3 und ein Federelement 4 auf.

Die Ausführungsbeispiele der Figuren 1A, 1B und 1C unterscheiden sich von den Ausführungsbeispielen der Figuren 2A, 2B und 2C lediglich durch die Ausführung des jeweiligen Federelements 4.

Die Figuren 1C bzw. 2C sind schematische Querschnittsansichten der Drehmomentübertragungsvorrichtungen 1 der Figuren 1A bzw. 2A entlang den Schnittlinien B-B bzw. C-C.

In den Figuren 3A, 3B, 4A und 4B sind zwei weitere Ausführungsbeispiele einer Drehmomentübertragungsvorrichtung dargestellt. Diese unterscheiden sich lediglich durch die Art und Form des verwendeten Federelements.

Wie in den Figuren 1A, 2A und 1C, 2C zu erkennen ist, ist die Nabe 3 auf der Welle 2 angeordnet. Dazu weist die Nabe 3 eine entsprechend dimensionierte Bohrung 5 auf, wobei die Welle 2 mit einem Ende in die Bohrung 5 gesteckt ist. Im Ausführungsbespiel handelt es sich bei der Bohrung um eine Durchgangsbohrung. Zumindest im Bereich der gegenseitigen Überdeckung von Welle 2 und Nabe 3 weisen die Welle 3 an ihrem Außenumfang eine Wellenverzahnung 6 und die Nabe 2 an ihrem Innenumfang der Durchgangsbohrung 5 eine Nabenverzahnung 7 auf (siehe Figuren 1C und 2C). Die Wellenverzahnung 6 und die Nabenverzahnung 7 stehen in Eingriff, um eine gegenseitige, formschlüssige Drehmomentübertragung zu ermöglichen (siehe Figuren 1C und 2C).

Die Figuren 1B und 2B zeigen schematische Ausführungsformen des Federelements 4 im freien, d.h. nicht montierten Zustand.

Beide Ausführungsformen des Federelements 4 sind einstückig ausgebildet und vorteilhafterweise aus federelastischem Material, z.B. Federstahl, gefertigt. Die Federelemente 4 sind sowohl hinsichtlich des Materials als auch hinsichtlich der Fertigung sehr kostengünstig herstellbar. Jegliche von außen bewirkte Formänderung, insbesondere ein Stauchen, Strecken oder ein Dehnen des Federelements 4, erzeugt eine rückstellende Federkraft im Material des Federelements 4.

Die Ausführungsform des Federelements 4 gemäß Figur 1B weist die Form eines mehrfach gekrümmten Federstabs auf, wobei den gegenüberliegenden, freien Enden jeweils eine zusätzliche, verstärkte Krümmung bzw. Formgebung aufgeprägt ist. Wie anhand der Figur 1A noch deutlich werden wird, dient die spezielle Formgebung der Befestigung des Federelements 4 an der Nabe.

Die Ausführungsform des Federelements 4 gemäß Figur 2B weist zwei Schenkel 4-1, 4-2 mit einer gemeinsamen Basis 4-3 auf. Die Haupterstreckungsrichtungen der Schenkel 4-1, 4-2 sind gleich und weisen in dieselbe Richtung (in Figur 2B nach links).

Die Montage, Anordnung und Wirkungsweise der Federelemente 4 werden nun anhand der Figuren 1A, 2A und 1C, 2C erläutert:
Die Federelemente 4 sind noch vor dem Zusammenfügen von Welle 2 und Nabe 3 an der Nabe 3 zu montieren.

Bei der Ausführungsform des Federelements 4 gemäß Figur 1B wird das Federelemente 4 mit einem freien Ende durch die Durchgangsbohrung 5 der Nabe 3 geführt (siehe Figur 1A). Im montierten Zustand durchdringt das Federelement die Nabe vollständig, wobei das Federelement 4 derart geformt ist, dass es gegenüberliegende Stirnseiten 8, 9 der Nabe 3 hintergreift (d.h. die freien Enden kommen jeweils mit einer Stirnseite 8, 9 der Nabe 3 in Anschlag). Ein freies Ende des Federelements kann zusätzlich an einer der Durchgangsbohrung 5 abgewandten Außenseite der Nabe 3 befestigt sein. Im Ausführungsbeispiel der Figur 1A ist eine Bohrung 10 an der Außenseite der Nabe 3 angebracht, in die das freie Ende des Federelements 4 gesteckt wird. Jedoch sind auch andere Formgebungen denkbar, um das freie Ende mit der Nabe in formschlüssige Verbindung zu bringen.

Vorteilhafterweise ist das Federelement 4 im freien, d.h. entspannten Zustand kürzer als die Durchgangsbohrung, sodass das Federelement 4 zur Montage leicht gestreckt werden muss. Durch das Strecken wird im Federelement 4 eine Federspannung aufgebaut, welche in Kombination mit den hintergreifenden Enden einen sicheren Halt des Federelements 4 in der Nabe gewährleistet.

Bei der Ausführungsform des Federelements 4 gemäß Figur 2B wird dieses mit beiden freien Schenkeln 4-1, 4-2 durch die Durchgangsbohrung 5 der Nabe 3 geführt, sodass das Federelement 4 die Nabe 3 vollständig durchdringt (siehe Figur 2A). Das Federelement 4 ist derart ausgestaltet, dass im montierten Zustand die Basis 4-3 des Federelements 4 die Nabe 3 an einer Stirnseite 9 überdeckt bzw. hintergreift bzw. das Federelement mit einer Stirnseite 9 der Nabe in Anschlag steht. Die beiden freien Enden der Schenkel 4-1, 4-2 ragen auf der gegenüberliegenden Seite der Nabe 3 aus der Durchgangsbohrung 5 heraus und hintergreifen die Nabe 3 an der gegenüberliegenden Stirnseite 8 (d.h. kommen mit der Stirnseite der Nabe 3 in Anschlag).

Vorteilhafterweise ist das Federelement 4 gemäß der Ausgestaltung nach Figur 2B derart ausgebildet, dass zum Zwecke der Montage in der Nabe 3 die beiden Schenkel 4-1, 4-2 zusammengedrückt werden müssen. Insbesondere ist der Abstand der freien Enden der Schenkel 4-1, 4-2 größer als der Durchmesser der Durchgangsbohrung 5 der Nabe 3. Dadurch ist das Federelement 4 bzw. sind die Schenkel 4-1, 4-2 im montierten Zustand radial nach außen vorgespannt, sodass dem Federelement 4 eine radial nach außen wirkende Federspannung aufgeprägt ist. Dies bewirkt einen besseren Halt des Federelements 4 in der Nabe 3.

Nach der Montage des jeweiligen Federelements 4 an der Nabe 3 wird die Welle 2 derart durch die Durchgangsbohrung 5 der Nabe 3 gedrückt, dass die Wellenverzahnung 6 und die Nabenverzahnung 7 in Eingriff kommen. Das Federelement 4 ist derart ausgebildet und dimensioniert, dass beim Einführen der Welle 2 in die Bohrung 5 der Nabe, das Federelement 4 - genauer gesagt, der innerhalb der Durchgangsbohrung 5 befindliche Abschnitt des Federelements, radial nach außen gedrückt wird. Im komplett montierten Zustand der Drehmomentübertragungsvorrichtung 1 ist das Federelement 4 zwischen Welle 2 und Nabe 3 angeordnet und stützt sich an den Auflagepunkten A sowohl an der Welle 2 als auch an der Nabe 3 ab. Durch die Deformation des Federelements 4 beim Einführen der Welle 2 in die Nabe 3 entsteht eine rückstellende Materialspannung und Federkraft.

Wie wird anhand der Figuren 1C und 2C deutlich wird, stützt sich das Federelement 4 an den Flanken benachbarter Zähne der Wellenverzahnung ab. Wie oben bereits erwähnt wurde, entsteht durch das Stauchen des Federelements 4 beim Einführen der Welle 2 in die Durchgangsöffnung der Nabe 3 eine rückstellende Materialspannung und Federkraft F. Durch diese Anordnung ist zumindest eine Komponente der Federkraft F in einer Umfangsrichtung bzw. Rotationsrichtung der Welle 2, also tangential zur Welle 2 bzw. Nabe 3, gerichtet und bewirkt, dass die Flanken von Wellenverzahnung 6 und Nabenverzahnung 7 über den gesamten Umfang aufeinander gedrückt werden. Die Kraft F, beziehungsweise die entsprechende Komponente, wirkt über den gesamten Umfang von Welle 2 und Nabe 3 und ist über den gesamten Umfang tangential zu Welle und Nabe gerichtet. Die Federkraft F ist somit über den gesamten Umfang von Well2 und Nabe 3 einer möglichen relativen Drehbewegung M von Welle 2 und Nabe 3 entgegen gerichtet. Dadurch wird die relative Lage von Welle 2 und Nabe 3 fixiert bzw. stabilisiert und ein Aufeinanderschlagen der Flanken von Wellenverzahnung 6 und Nabenverzahnung 7 zumindest erheblich vermindert.

Auch wenn in den Figuren 1A und 1C nur ein Federelement der Ausführung gemäß Figur 1B verwendet wird, so können auch mehrere Federelemente 4 an verschiedenen Winkelpositionen im Umfangsrichtung der Welle 2 bzw. Nabe 3 angeordnet werden. Dadurch kann die relative Lage zwischen Welle 2 und Nabe 3 noch weiter stabilisiert und fertigungsbedingtes Spiel in der Verzahnung kompensiert werden.

Zur einfacheren Montage des Federelements 4 kann zumindest eine Lücke 11 in der Nabenverzahnung 7 und/oder der Wellenverzahnung 6 ausgebildet sein. Dazu kann beispielsweise ein Zahn in der Nabenverzahnung 7 und/oder der Wellenverzahnung 6 fehlen.

Ein weiterer Vorteil der vorliegenden Erfindung ist darin zu sehen, dass zwar das radiale Spiel in der Verzahnung 6, 7 von Welle 2 und Nabe 3 reduziert bzw. eliminiert ist, ein (relativ zur Rotationsache Z der Welle) axialer Ausgleich jedoch weiterhin möglich ist. Ferner ist für die Montage der Drehmomentübertragungsvorrichtung ein relatives Ausrichten von Welle 2 und Nabe 3 in Drehrichtung nicht notwendig, d.h. Welle 2 und Nabe 3 können in beliebigen Winkelpositionen (relativ zur Drehachse) ineinandergeschoben werden.

In den Figuren 3A, 3B, 4A und 4B sind alternative Ausgestaltungen der Drehmomentübertragungsvorrichtung 1 dargestellt. Die Unterschiede sind in der Form und Befestigung des Federelements 4 und in der Montage der Drehmomentübertragungsvorrichtung 1 zu finden. Die prinzipielle Wirkungsweise und die sich ergebenden Vorteile sind identisch mit denen der Ausführungsbeispiele der Figuren 1A, 1B, 1C und 2A, 2B, 2C oder ergeben sich für den Fachmann in analoger Weise. Im Folgenden werden nur die Unterschiede erläutert. Gleiche Elemente sind mit gleichen Bezugszeichen versehen.

Zur Montage der Ausführungsbeispiele der Drehmomentübertragungsvorrichtung 1 gemäß den Figuren 3A und 4A werden die entsprechenden Federelemente 4 (siehe Figuren 3b und 4B) zunächst auf der jeweiligen Welle 2 angebracht.

Bei Verwendung des Federelement gemäß Figur 3B werden dessen freie Enden in entsprechend ausgebildete Vertiefungen 10 der Welle 2 geführt, sodass sich eine formschlüssige Verbindung mit der Welle 2 ergibt und das Federelement 4 sicher auf der Welle 2 befestigt ist. Vorteilhafterweise ist das Federelement 4 derart bemessen, dass es zur Montage auf der Welle leicht gestreckt werden muss, sodass sich zusätzlich eine die Befestigung unterstützende Vorspannung ergibt. Im befestigten Zustand hintergreift zumindest ein freies Ende des Federelements 4 die Welle 2 an einer Stirnseite 10. Es ist jedoch auch möglich, dass beide freien Enden des Federelements 4 die Welle 2 an gegenüberliegenden Stirnseiten hintergreift.

Bei Verwendung des Federelement gemäß Figur 4B wird dieses mit den freien Enden in entsprechend, an gegenüberliegenden Außenseiten der Welle 2 ausgebildete Vertiefungen 10 geführt, sodass sich eine formschlüssige Verbindung mit der Welle 2 ergibt und das Federelement 4 sicher auf der Welle 2 befestigt ist. Vorteilhafterweise ist das Federelement 4 derart bemessen, dass die beiden Schenkel 4-1 und 4-2 zur Montage leicht auseinander gedrückt werden müssen, sodass sich zusätzlich eine die Befestigung unterstützende Vorspannung ergibt. Im befestigten Zustand umgreift das Federelement 4 mit den Schenkeln 4-1, 4-2 und der Basis 4-3 die Welle 2 an einer Stirnseite 10 und den Außenseiten.

Anschließend wird, bei beiden Ausführungsbeispielen, die Nabe 3 über die Welle 2 mit dem darauf montierten Federelement 4 geschoben. Die Federelemente 4 sind dabei so dimensioniert und ausgestaltet, dass sie dabei in Ihrer Längsstreckung etwas gestaucht werden und sich an Welle 2 und Nabe 3 an den Auflagerpunkten A abstützen. Dadurch entsteht eine Vorspannung im Federelement 4, welches dieses fest zwischen Welle 2 und Nabe 3 fixiert. Gleichzeitig entsteht durch diese Materialspannung eine Federkraft F (analog Figuren 1C und 2C), welche einer relativen Drehbewegung von Welle 2 und Nabe 3 entgegenwirkt. Im Unterschied zu den Ausführungsbeispielen der Figuren 1A, 1B, 1C und 2A, 2B, 2C stützt sich das Federelement an den Flanken benachbarter Zähne der Nabenverzahnung 7 ab.

## Patentansprüche

1. Drehmomentübertragungsvorrichtung (1) mit
- einer Welle (2), welche an ihrem Außenumfang eine Wellenverzahnung (6) aufweist,
- einer Nabe (3), welche an einem Innenumfang eine Nabenverzahnung (7) aufweist, wobei die Nabe (3) derart auf der Welle (2) angeordnet ist, dass die Wellenverzahnung (6) und die Nabenverzahnung (7) ineinandergreifen, um Drehmoment zu übertragen,
- zumindest einem Federelement (4), welches die Nabe (3) vollständig durchdringt und sich an der Welle (2) und der Nabe (3) abstützt und eine Federkraft (F) auf die Nabe (3) und die Welle (2) ausübt, wobei zumindest eine Komponente der Federkraft (F) derart gerichtet ist, dass über den gesamten Umfang von Welle und Nabe benachbarte Flanken der Wellenverzahnung (6) und der Nabenverzahnung (7) aneinandergedrückt werden
**dadurch gekennzeichnet, dass**
das Federelement (4) zwei Schenkel (4-1, 4-2) aufweist, welche an unterschiedlichen Positionen zwischen der Welle (2) und der Nabe (3) angeordnet sind.

2. Drehmomentübertragungsvorrichtung (1) nach Anspruch 1, wobei die Nabenverzahnung (7) und/oder die Wellenverzahnung (6) zumindest eine Lücke (11) aufweist und das Federelement (4) in der zumindest einen Lücke (11) angeordnet ist.

3. Drehmomentübertragungsvorrichtung (1) nach einem der Ansprüche 1 bis 2, wobei das Federelement (4) die Nabe (3) an einer Stirnseite (8, 9) zumindest teilweise überdeckt.

4. Drehmomentübertragungsvorrichtung (1) nach Anspruch 3, wobei ein freies Ende zumindest eines Schenkels (4-1, 4-2) die Nabe (3) an der gegenüberliegenden Stirnseite (9, 8) hintergreift.

5. Drehmomentübertragungsvorrichtung (1) nach einem der Ansprüche 1 bis 4, wobei das Federelement die Welle (2) axial umgreift und ein freies Ende zumindest eines Schenkels (4-1, 4-2) an einer Außenseite der Welle (3) befestigt ist.

6. Drehmomentübertragungsvorrichtung (1) nach einem der Ansprüche 1 bis 5, wobei das Federelement (4) derart ausgebildet ist, dass den beiden Schenkeln (4-1, 4-2) eine radial nach außen wirkende Federspannung aufgeprägt ist.

7. Drehmomentübertragungsvorrichtung (1) nach einem der Ansprüche 1 bis 6, wobei das zumindest eine Federelement (4) einstückig ausgebildet ist.

## Claims

1. Torque transmission device (1) having
- a shaft (2) which has a shaft tooth arrangement (6) on the outer periphery thereof,
- a hub (3) which has a hub tooth arrangement (7) on an inner periphery, wherein the hub (3) is arranged in such a manner on the shaft (2) that the shaft tooth arrangement (6) and the hub tooth arrangement (7) engage one inside the other in order to transmit torque,
- at least one resilient element (4) which completely extends through the hub (3) and which is supported on the shaft (2) and the hub (3) and which applies a resilient force (F) to the hub (3) and the shaft (2), wherein at least one component of the resilient force (F) is orientated in such a manner that flanks of the shaft tooth arrangement (6) and the hub tooth arrangement (7) are pressed against each other, which flanks are adjacent over the entire periphery of the shaft and hub
**characterised in that**
the resilient element (4) has two members (4-1, 4-2) which are arranged at different positions between the shaft (2) and the hub (3).

2. Torque transmission device (1) according to claim 1, wherein the hub tooth arrangement (7) and/or the shaft tooth arrangement (6) has at least one gap (11) and the resilient element (4) is arranged in the at least one gap (11).

3. Torque transmission device (1) according to any one of claims 1 to 2, wherein the resilient element (4) at least partially covers the hub (3) at an end face (8, 9).

4. Torque transmission device (1) according to claim 3, wherein a free end of at least one member (4-1, 4-2) engages behind the hub (3) at the opposite end face (9, 8).

5. Torque transmission device (1) according to any one of claims 1 to 4, wherein the resilient element engages axially around the shaft (2) and a free end of at least one member (4-1, 4-2) is secured to an outer side of the shaft (3).

6. Torque transmission device (1) according to any one of claims 1 to 5, wherein the resilient element (4) is constructed in such a manner that a resilient tension which acts radially outwards is applied to the two members (4-1, 4-2).

7. Torque transmission device (1) according to any one of claims 1 to 6, wherein the at least one resilient element (4) is constructed in an integral manner.

## Revendications

1. Dispositif de transmission de couple (1) avec
- un arbre (2), qui comporte une denture d'arbre (6) sur sa périphérie extérieure,
- un moyeu (3), qui comporte une denture de moyeu (7) sur sa périphérie intérieure, le moyeu (3) étant agencé de telle sorte sur l'arbre (2) que la denture d'arbre (6) et la denture de moyeu (7) pénètrent l'une dans l'autre pour transmettre le couple,
- au moins un élément formant ressort (4), qui traverse complètement le moyeu (3) et qui s'appuie à l'arbre (2) et au moyeu (3) et exerce une force de ressort (F) sur le moyeu (3) et l'arbre (2), au moins une composante de la force de ressort (F) étant orientée de telle sorte que des flancs voisins de la denture d'arbre (6) et de la denture de moyeu (7) sont poussés les uns contre les autres sur toute la périphérie de l'arbre et du moyeu,
**caractérisé en ce que** l'élément formant ressort (4) présente deux branches (4-1, 4-2) qui sont agencées à des positions différentes entre l'arbre (2) et le moyeu (3).

2. Dispositif de transmission de couple (1) selon la revendication 1, dans lequel la denture de moyeu (7) et/ou la denture d'arbre (6) présentent au moins un vide (11) et l'élément formant ressort (4) est agencé dans l'au moins un vide (11).

3. Dispositif de transmission de couple (1) selon l'une quelconque des revendications 1 à 2, dans lequel l'élément formant ressort (4) recouvre au moins en partie le moyeu (3) au niveau de son côté frontal (8, 9).

4. Dispositif de transmission de couple (1) selon la revendication 3, dans lequel une extrémité libre d'au moins une branche (4-1, 4-2) passe par-derrière le moyeu (3) au niveau du côté frontal (9, 8) opposé.

5. Dispositif de transmission de couple (1) selon l'une quelconque des revendications 1 à 4, dans lequel l'élément formant ressort entoure l'arbre (2) de façon axiale et une extrémité libre d'au moins une branche (4-1, 4-2) est fixée à un côté extérieur de l'arbre (3).

6. Dispositif de transmission de couple (1) selon l'une quelconque des revendications 1 à 5, dans lequel l'élément formant ressort (4) est réalisé de telle sorte qu'une tension élastique agissant de façon radiale vers l'extérieur est appliquée sur les deux branches (4-1, 4-2).

7. Dispositif de transmission de couple (1) selon l'une quelconque des revendications 1 à 6, dans lequel l'au moins un élément formant ressort (4) est réalisé d'une seule pièce.
